Europäisches Patentamt

European Patent Office

Office européen des brevets

(11) Publication number: **0 185 258 B1**

## EUROPEAN PATENT SPECIFICATION

(45) Date of publication of patent specification: **24.06.92**

(51) Int. Cl.⁵: **G06F 13/40**, G06F 13/42

(21) Application number: **85115445.0**

(22) Date of filing: **05.12.85**

(54) Microprocessor system.

(30) Priority: **12.12.84 IT 2402184**

(43) Date of publication of application:
**25.06.86 Bulletin 86/26**

(45) Publication of the grant of the patent:
**24.06.92 Bulletin 92/26**

(84) Designated Contracting States:
**DE FR GB**

(56) References cited:
**US-A- 3 810 114**
**US-A- 4 144 565**
**US-A- 4 213 176**

**ELECTRONIC DESIGN, vol. 26, no. 11, 24th May 1978, page 116;"8-Bit single-board microcomputer, ASC/80"**

**Bernstein, Herbert, Hochintegrierte Digital-schaltungen und Mikroprozessoren, Richard Pflaum Verlag KG, München, 1978**

**Garland, Harry, Introduction to Microprocessor System Design, McGraw-Hill Kogakusha, Ltd., 1979**

**Siewiorek,D.Bell,C.G. Newell,A., Computer**

**Structures: Principles and Examples, McGraw-Hill International Editions, 1982**

(73) Proprietor: **BULL HN INFORMATION SYSTEMS ITALIA S.p.A.**
**Via Martiri d'Italia 3**
**I-10014 Caluso (Torino)(IT)**

(72) Inventor: **Costantini, Giorgio**
**Via S.Paolino 14**
**I-20142 Milano(IT)**

## Description

The present invention relates to a microprocessor system and, more particularly, to a microprocessor system having address/data bus multiplexed and provided with a plurality of output gates TTL.

Several microprocessors present a multiplexed address/data bus to reduce the total number of external connection pins. A corresponding system is known from an article in ELECTRONIC DESIGN, vol. 26, no. 11, p. 116: "8-bit single-board microcomputer ASC/80".

During an external operation performed by such microprocessors (for instance a memory access or an input/output operation) both addresses and data are present, during different instants of the machine cycle, on the channel or multiplexed bus.

The selection between the two kinds of information is performed with the use of suitable control signals supplied by the microprocessors themselves.

The only restraint for the use of a microprocessor with multiplexed bus is the demultiplexing process of such bus in order to enable its interfacing with standard memory circuits.

Demultiplexing is generally obtained by means of a register latching the information representative of an address in correspondence of a suitable microprocessor control signal.

Since the latching instant and for the whole remaining machine cycle the address/data bus changes to a data bus only.

The microprocessors, embodied with MOS (Metal-Oxide-Semiconductor) technology, provide a limited capacity of static load (fan out) to their own bus lines. The output logic gate coupled to each of said lines can, in fact, output a little current amount. If the line is overcharged it can be damaged by overheat and it may work incorrectly. The most of the microprocessor manufacturers point out the maximum static load of the bus lines.

Typical static load features consists of a single TTL load.

Generally such load features are sufficient for microprocessor systems embodied on a single plate where the microprocessor is directly interconnected through the data bus and the address bus to memories and peripherals of its own MOS family.

However, in systems where the microprocessor has to drive several TTL inputs the fan-out of the microprocessor bus lines must be increased by suitable insertion of additional drivers between bus lines and TTL loads.

With reference to the mentioned case and when the used microprocessor is provided with a multiplexed address/data bus, the present invention avoids the insertion of any drivers on the data bus.

In fact, according to the present invention, the inputs of the output gates TTL are not directly connected to the lines of the multiplexed address/data bus but to the outputs of the demultiplexing register which, therefore, acts also as driver for the system TTL output gates. As the information present on the outputs of the demultiplexing register formally stands for addresses, the microprocessor task is to treat such information as data to be transferred to a preestablished output gate TTL.

This is obtained by mapping the output gates TTL as memory and accessing one of such gates with a fictitious memory access operation. The invention is set out in claims 1 and 2.

These and other features will appear clearly from the following description of a preferred embodiment of the present invention and from the enclosed drawing where:

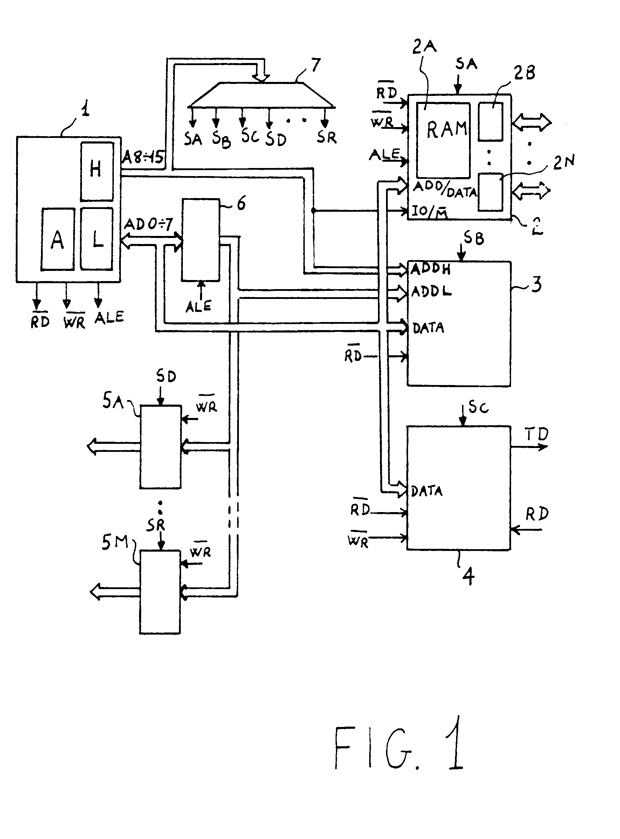

Figure 1 shows a microprocessor system with multiplexed address/data bus object of the present invention.

The microprocessor system of fig. 1, which may be embodied on a single board, can for instance stand for the control circuitry of a dot matrix printer. It is constituted by:

- a microprocessor 1, for instance microprocessor 8085 manufactured by INTEL
- circuital block 2 comprising a read/write working memory RAM 2A and a plurality of programmable input/output gates 2B, ..., 2N. Block 2 can be implemented with one or more integrated circuits manufactured by INTEL with code 8155 of the same logic family of microprocessor 8085.
 For sake of simplicity, during the present description assumption will be made that circuital block 2 is constituted by a single circuit 8155;
- a read only control memory 3 devoted to contain the control programs which can be executed by microprocessor 1; control memory 3 can for instance be implemented with one or more integrated circuits manufactured by INTEL with code 8316 or 2716 of the same logic family of microprocessor 8085.
 For sake of description simplicity assumption is however made that the control memory is constituted by only one of such circuits;
- a data communication interface 4 designated to serially receive and transfer data on terminals RD or TD respectively.
 Interface 4 can for instance be implemented with integrated circuit manufactured by INTEL with code 8251 of the same logic family of microprocessor 8085;

- a plurality of TTL output gates 5A, ..., 5M for instance implemented with integrated circuits manufactured by TEXAS with code 74LS377;
- a demultiplexing register 6 for instance implemented with integrated circuit manufactured by TEXAS with code 74LS373;
- a decoder 7 designated to select the suitable system unit to/from which microprocessor 1 wants to transfer/receive information.

Decoder 7 can for instance be implemented with one or more integrated circuits manufactured by INTEL with code 8205.

Microprocessor 1 has 8 output lines A8÷A15 where the 8 most significant bits of the address are provided during an access operation to one of the units constituting the system.

The 8 less significant bits of the address are provided on the bidirectional lines AD 0÷7 at the beginning of the access operation.

Control signal ALE in output from microprocessor 1 states, at logical level 1, that the information present on lines AD 0÷7 is representative of the address bits A0÷7.

In a subsequent phase of the access operation to one of the system units, when signal ALE is at logical level 0, an information is present representative of the datum received or transferred by the micrprocessor.

Signals $\overline{RD}$ ($\overline{WR}$) in output from microprocessor 1 indicates, when at logical level 0, that the datum is to be received (transferred) by the microprocessor.

A suitable number of address lines A8÷15 are connected to the intputs of decoder 7 (for instance lines A11÷15 if assumption is made to map the memory space available according to 2K locations blocks).

Decoder 7 provides in output a plurality of signals $S_A$, $S_B$, ... $S_R$, intended to select the system unit to (from) which the microprocessor wants to transfer (receive) an information.

The address/data lines AD 0÷7 are connected to the inputs of register 6 which receives on its control input a signal ALE.

When ALE rises to logical level 1, register 6 latches the information present at its inputs making therefore available on its outputs the information representative of address bits A0÷A7.

Register 6 outputs are connected to the inputs of output gates 5A, ... 5M, and to the inputs ADDL of the less significant address bits of control memory 3.

Besides, inputs ADDH receiving the most significant bits of memory 3 are connected to a suitable number of address lines A8÷A15.

Microprocessor pins AD0÷7 are further connected to the multiplexed pins ADD/DATA of circuital block 2 and to pins DATA of both control memory 3 and of communication interface 4.

As such units belong to the same logic family of microprocessor 1 they can be controlled by microprocessor 1 without driving problems.

Signal ALE besides to the enabling input of register 6, is also applied to a suitable control input of circuital block 2 and provides the latching of information present on pins ADD/DATA in a demultiplexing register internal to circuit 2, when this circuit is selected.

Circuit 2 further receives a suitable information, for instance address bit A8, on a control input IO/$\overline{M}$. Such information states, if at logical level 0 (1) that the unit involved in the data transfer with microprocessor 1 is memory RAM 2A (one of the gates 2B, ..., 2N)

Signals $\overline{RD}$, $\overline{WR}$, in output from microprocessor 2, are applied to two control inputs of circuital block 2 and communication interface 4.

Signal $\overline{RD}$ is further applied to a control input of control memory 3 and signal $\overline{WR}$ to the timing inputs of output gates 5A, ..., 5M.

It can be now shown how microprocessor 1 loads a datum into one of the output gates 5A, ... 5M.

This is possible by having a memory write operation executed by microprocessor 1 into a location whose address portion A8÷A15 selects the desired output gate and whose address portion A0÷A7 is representative of the datum to be transferred to such gates.

With reference to microprocessor 8085, to obtain such result in an immediate way, the microprocessor has to perform for instance a microinstruction "STA addr" (storing of the accumulator content into the memory location "addr") where the value of the two bytes constituting the address information "addr" is given according to the above mentioned criterion.

It is also possible the transfer of the content of any of the microprocessor registers to a pre-established output gate.

However, in this case, before the processor execute the fictitious memory access operation, it must transfer to its internal address register both the information selecting the output gate and the content of its internal register containing the datum to be transferred.

For instance, with reference to microprocessor 8085 again, a simple routine to transfer the content of accumulator A to an output gate having address XX, may be:

MVI H,XX;    transfer of address XX to a register H internal to microprocessor 8085

MOV L,A;    transfer of accumulator A content to a register L internal to the microprocessor

MOV M,A;    transfer of the accumulator content to the memory location whose address is contained into register H (most significant address byte A8-A15) and L (less significant address byte A - A7).

It is clear that with this simple routine the information contained into accumulator A, which must be transferred to an output gate, is firstly transferred to internal register L generally devoted to store an address portion and, with the final microinstruction MOV M, A such information is loaded into register 6 and then transferred to the output gate which is selected according to the content of register H.

The information appearing on pins AD0-7 in a second phase of instruction MOV M,A is not important for the transfer and it is actually ignored by the selected output gate and by the other system components.

## Claims

1.  Microprocessor system comprising:
    -   microprocessor (1) having a first group of address lines internally connected to the output of a first address register H, a second group of multiplexed address/data lines internally and selectively connected to the output of a second address register L or of an accumulator and a plurality of control lines,
    -   a demultiplexing register (6) having inputs connected to said second group of multiplexed lines and outputs,
    -   a control memory (3) having address inputs connected to the outputs of said demultiplexing register and to one line at least of said first group, having information outputs connected to said second group of lines, and a selection input,
    -   a plurality of TTL output gates (5A..5M), each provided with data inputs,
    -   a decoder (7) having inputs connected to a subset of lines of said first group and a plurality of outputs, each of them respectively connected to the selection input of said control memory
        said system characterized in that
    -   each of said TTL output gates comprises one enabling input connected to said microprocessor,
    -   a plurality of said decoder outputs is connected to corresponding output gates TTL,
        and further characterized by
    -   direct connection between the outputs of said demultiplexing register and the data

inputs of said TTL output gates, and in that said address register L, intended to contain an address portion, is loaded with data information to be transferred to one of said output gates during the time slot used to transfer address information.

2.  In a microprocessor system comprising:
    -   a microprocessor (1) having a first group of address lines internally connected to the output of a first address register H, a second group of multiplexed address/data lines internally and selectively connected to the output of a second address register L or of an accumulator and a plurality of control lines,
    -   a demultiplexing register (6) having inputs connected to said second group of multiplexed lines and outputs,
    -   a control memory (3) having address inputs connected to the outputs of said demultiplexing register and to one line at least of said first group, having information outputs connected to said second group of lines, and a selection input,
    -   a plurality of TTL output gates (5A..5M), each provided with data inputs,
    -   a decoder (7) having inputs connected to a subset of lines of said first group and a plurality of outputs, each of them respectively connected to the selection input of said control memory
        said system characterized in that
    -   each of said TTL output gates comprises one enabling input connected to said microprocessor,
    -   a plurality of said decoder outputs is connected to corresponding output gates TTL,
        and further characterized by
    -   a direct connection between the output of said demultiplexing register and the data inputs of said TTL output gates,
    the information transfer method from said microprocessor to one of said output gates TTL comprising the following steps:
    -   loading said address register H with an information selecting an output gate,
    -   loading, during the same machine cycle, said address register L with the information to be transferred,
    -   executing a fictitious memory transfer operation to the address specified by the content of said address register H and L.

## Revendications

1. Système à microprocesseur comprenant:

- un microprocesseur (1) comportant un premier groupe de lignes d'adresse connectées intérieurement à la sortie d'un premier registre d'adresse H, un deuxième groupe de lignes d'adresses/de données multiplexées connectées intérieurement et sélectivement à la sortie d'un deuxième registre d'adresse L ou d'un accumulateur et une pluralité de lignes de commande,
- un registre de démultiplexage (6) comportant des entrées connectées audit deuxième groupe de lignes multiplexées et des sorties,
- une mémoire de contrôle (3) comportant des entrées d'adresse connectées aux sorties dudit registre de démultiplexage et à une ligne au moins dudit premier groupe, comportant des sorties d'infor-mation connectées audit deuxième grou-pe de lignes, et une entrée de sélection,
- une pluralité de portes de sortie TTL (5A,...,5M) pourvues chacune d'entrées de données,
- un décodeur (7) comportant des entrées connectées à un sous-groupe de lignes dudit premier groupe et une pluralité de sorties dont chacune est connectée respectivement à l'entrée de sélection de ladite mémoire de contrôle, ledit système étant caractérisé en ce que:
- chacune desdites portes de sortie TTL comprend une entrée de validation connectée audit microprocesseur,
- une pluralité desdites sorties du décodeur est connectée à des portes de sortie TTL correspondantes, et caractérisé en outre par:
- une connexion directe entre les sorties dudit registre de démultiplexage et les entrées de données desdites portes de sortie TTL, et en ce que ledit registre d'adresse L, destiné à contenir une partie d'adresse, est chargé avec des données d'information à transférer jusqu'à une desdites portes de sortie pendant la tranche de temps utilisée pour transférer des informations d'adresse.

2. Dans un système à microprocesseur comprenant:

- un microprocesseur (1) comportant un premier groupe de lignes d'adresse connectées intérieurement à la sortie d'un premier registre d'adresse H, un deuxième groupe de lignes d'adresses/de données multiplexées connectées intérieurement et sélectivement à la sortie d'un deuxième registre d'adresse L ou d'un accumulateur et une pluralité de lignes de commande,

- un registre de démultiplexage (6) comportant des entrées connectées audit deuxième groupe de lignes multiplexées et des sorties,
- une mémoire de contrôle (3) comportant des entrées d'adresse connectées aux sorties dudit registre de démultiplexage et à une ligne au moins dudit premier groupe, comportant des sorties d'informations connectées audit deuxième groupe de lignes, et une entrée de sélection,
- une pluralité de portes de sortie TTL (5A,...,5M) pourvues chacune d'entrées de données,
- un décodeur (7) comportant des entrées connectées à un sous-groupe de lignes dudit premier groupe et une pluralité de sorties dont chacune est connectée respectivement à l'entrée de sélection de ladite mémoire de contrôle, ledit système étant caractérisé en ce que :
- chacune desdites portes de sortie TTL comprend une entrée de validation connectée audit microprocesseur,
- une pluralité desdites sorties de décodeur est connectée à des portes de sortie TTL correspondantes, et caractérisé en outre par:
- une connexion directe entre la sortie dudit registre de démultiplexage et les entrées de données desdites portes de sortie TTL,

le procédé de transfert d'informations dudit microprocesseur jusqu'à une desdites portes de sortie TTL comprenant les opérations suivantes qui consistent à:

- charger ledit registre d'adresse H avec des informations sélectionnant une porte de sortie,
- charger ledit registre d'adresse L avec des informations à transférer, pendant le même cycle machine,et à
- exécuter une opération de transfert de mémoire fictif à l'adresse spécifiée par les contenus desdites registres d'adresse H et L.

**Patentansprüche**

1. Mikroprozessorsystem mit:

- einem Mikroprozessor (1) mit einer ersten Gruppe von intern an den Ausgang eines ersten Adreßregisters (H) angeschlossenen Adreßleitungen, einer zweiten Gruppe multiplexbetriebener Adressen/Datenleitungen, welche intern und selektiv an den Ausgang eines zweiten Adreßregisters (L) oder einen Akkumulator und mehrere Steuerleitungen angeschlossen sind;

- einem Demultiplexerregister (6), dessen Eingänge an die zweite Gruppe multiplexbetriebener Leitungen und Ausgänge angeschlossen sind;

- einem Steuerspeicher (3), dessen Adreßeingänge an die Ausgänge des Demultiplexerregisters und an wenigstens eine Leitung der ersten Gruppe angeschlossen sind, dessen Informationsausgänge an die zweite Gruppe von Leitungen angeschlossen sind und der einen Auswahleingang aufweist;

- mehreren TTL-Ausgangsgattern (5A...5M), von denen jedes Dateneingänge aufweist;

- einem Decoder (7), dessen Eingänge an eine Untergruppe von Leitungen der ersten Gruppe angeschlossen sind, und der mehrere Ausgänge aufweist, von denen jeder an den Auswahleingang des Steuerspeichers angeschlossen ist;

- wobei das System **dadurch gekennzeichnet** ist, daß

- jedes der TTL-Ausgangsgatter einen an den Mikroprozessor angeschlossenen Aktivierungseingang aufweist;

- eine Mehrzahl der Decoderausgänge an entsprechende TTL-Ausgangsgatter angeschlossen ist;
  und weiterhin **gekennzeichnet durch**

- eine direkte Verbindung zwischen den Ausgängen des Demultiplexerregisters und den Dateneingängen der TTL-Ausgangsgatter;
  sowie **dadurch,** daß das zur Aufnahme eines Adressenteils bestimmte Adreßregister mit Dateninformationen geladen wird, die während der für die Übertragung der Adreßinformation benutzten Zeitspanne an eines der Ausgangsgatter zu übertragen sind.

2. In einem Mikroprozessorsystem mit:

- einem Mikroprozessor (1) mit einer ersten Gruppe von intern an den Ausgang eines ersten Adreßregisters (H) angeschlossenen Adreßleitungen, einer zweiten Gruppe multiplexbetriebener Adressen/Datenleitungen, welche intern und selektiv an den Ausgang eines zweiten Adreßregisters (L) oder einen Akkumulator und mehrere Steuerleitungen angeschlossen sind;

- einem Demultiplexerregister (6), dessen Eingänge an die zweite Gruppe multiplexbetriebener Leitungen und Ausgänge angeschlossen sind;

- einem Steuerspeicher (3), dessen Adreßeingänge an die Ausgänge des Demultiplexerregisters und an wenigstens eine Leitung der ersten Gruppe angeschlossen sind, dessen Informationsausgänge an die zweite Gruppe von Leitungen angeschlossen sind und der einen Auswahleingang aufweist;

- mehreren TTL-Ausgangsgattern (5A...5M), von denen jedes Dateneingänge aufweist;

- einem Decoder (7), dessen Eingänge an eine Untergruppe von Leitungen der ersten Gruppe angeschlossen sind, und der mehrere Ausgänge aufweist, von denen jeder an den Auswahleingang des Steuerspeichers angeschlossen ist;

- wobei das System **dadurch gekennzeichnet** ist, daß

- jedes der TTL-Ausgangsgatter einen an den Mikroprozessor angeschlossenen Aktivierungseingang aufweist;

- eine Mehrzahl der Decoderausgänge an entsprechende TTL-Ausgangsgatter angeschlossen ist;
  und weiterhin **gekennzeichnet durch**

- eine direkte Verbindung zwischen den Ausgängen des Demultiplexerregisters und den Dateneingängen der TTL-Ausgangsgatter;

das Informationsübertragungsverfahren vom Mikroprozessor zu einem der TTL-Ausgangsgatter mit den folgenden Schritten:

- Laden des Adreßregisters H mit einer ein Ausgangsgatter auswählenden Information;

- während desselben Maschinenzyklus Laden des Adreßregisters L mit der zu übertragenden Information;

- Ausführen einer fiktiven Speicherübertragungsoperation an die durch den Inhalt der Adreßregister H und L bestimmte Adresse.

FIG. 1